# EUROPÄISCHE PATENTSCHRIFT

(11) **EP 0 718 038 B1**
(45) Veröffentlichungstag und Bekanntmachung des Hinweises auf die Patenterteilung: **09.10.2002**
(21) Anmeldenummer: 96103459.2
(22) Anmeldetag: 19.08.1992
(51) Int. Cl.: B03C 5/02

(54) **Vorrichtung zur Trennung von Gemischen mikroskopisch kleiner, in einer Flüssigkeit oder einem Gel suspendierter dielektrischer Teilchen**
Apparatus for separating mixtures of microscopic small dielectric particles dispersed in a fluid or a gel
Appareil pour la séparation de mélanges de particules diélectriques de taille microscopique suspendues dans un fluide ou un gel

(30) Priorität: 19.08.1991 DE 4127405
(43) Veröffentlichungstag der Anmeldung: 26.06.1996
(62) Teilanmeldung aus: 92918105.5
(73) Patentinhaber: FRAUNHOFER-GESELLSCHAFT ZUR FÖRDERUNG DER ANGEWANDTEN FORSCHUNG E.V., 80636 München (DE)
(72) Erfinder: Benecke, Wolfgang, 10785 Berlin (DE); Wagner, Bernd, Dr., D-25582 Looft (DE); Hagedorn, Rolf, 13057 Berlin (DE); Fuhr, Günter, D-13127 Berlin (DE); Müller, Torsten, 12439 Berlin (DE)
(74) Vertreter: Münich, Wilhelm, Dr.

(56) Entgegenhaltungen:
- WO-A-92/07657
- PROCEEDINGS OF THE WORKSHOP ON MICRO ELECTRO MECHANICAL SYSTEMS INVESTIGATION OF MICRO STRUCTURES, SENSORS, ACTUATORS, MACHINES AND ROBOTS, NARA, JP., JAN. 30 - FEB. 2, 1991, Nr. WORKSHOP 4, 30.Januar 1991, INSTITUTE OF ELECTRICAL AND ELECTRONICS ENGINEERS, Seiten 259-264, XP000541281 FUHR G ET AL: "LINEAR MOTION OF DIELECTRIC PARTICLES AND LIVING CELLS IN MICROFABRICATED STRUCTURES INDUCED BY TRAVELING ELECTRIC FIELDS"
- PATENT ABSTRACTS OF JAPAN vol. 009, no. 283 (C-313), 9.November 1985 & JP-A-60 129150 (FUJI XEROX KK), 10.Juli 1985,
- JOURNAL OF ELECTROSTATICS, Bd. 25, Nr. 1, 1.Juni 1990, Seiten 109-123, XP000148335 MASSAO WASHIZU: "ELECTROSTATIC MANIPULATION OF BIOLOGICAL OBJECTS"
- PATENT ABSTRACTS OF JAPAN vol. 009, no. 283 (C-313), 9.November 1985 & JP-A-60 129151 (FUJI XEROX KK), 10.Juli 1985,

## Beschreibung

### Technisches Gebiet

Die Erfindung bezieht sich auf eine Vorrichtung zur Trennung von Gemischen mikroskopisch kleiner, dielektrischer Teilchen, bei welchen das Teilchengemisch in einer Flüssigkeit oder einem Gel suspendiert ist.

### Stand der Technik

Derartige Trennvorrichtungen sollen Gemische mikroskopisch kleiner Teilchen, wie biologische Zellen, Zellorganellen, Biomoleküle sowie anorganische, dielektrische Teilchen isolieren und für Untersuchungen oder technische Anwendungen aufbereiten.

Die Trennung bestimmter Teilchensorten aus Teilchengemischen ist beispielsweise in der Medizin, der Nahrungsmitteltechnologie, der Biologie, der Chemie und der Pharmazie erforderlich. Insbesondere wenn größere Mengen eines Gemisches getrennt werden sollen, ist es wünschenswert, ein kontinuierliches Trennverfahren einzusetzen.

Zur Trennung von Teilchengemischen sind verschiedene elektrokinetische Verfahren bekannt. Trennverfahren wie zum Beispiel die Gelelektrophorese, die Isotachophorese und die isoelektrische Fokussierung trennen Teilchengemische nach den unterschiedlichen Beweglichkeiten ihrer Bestandteile auf. Eine entscheidende Voraussetzung für eine solche Auftrennung besteht darin, daß durch geeignete Maßnahmen die in jedem Fall auftretenden Konvektionen auf einen unkritischen Wert reduziert werden, da die Beweglichkeit der Teilchen durch die Konvektion beeinflußt wird.

Die Reduzierung der Konvektion erfolgt entweder durch Kühlung oder durch die Verwendung konvektionsverhindernder Träger. Dabei sind Grenzen gesetzt, wenn relativ große Teilchen, wie biologische Zellen, zu trennen sind, oder wenn im kontinuierlichen Betrieb gearbeitet werden soll. Ein kontinuierlicher Betrieb kann deshalb nur durch aufwendige Kühltechniken oder durch komplizierte Stabilisierungstechniken, beispielsweise durch Nutzung von Zentrifugalkräften, erreicht werden.

Die dabei anfallenden Kosten und technologischen Probleme haben dazu geführt, daß kontinuierlich arbeitende Elektrophoreseverfahren bislang nur in beschränktem Umfang Verwendung finden.

Aus dem Aufsatz von M. Washizu, Electrostatic Manipulation of Biological Objects, erschienen in Journal of Electrostatics, Band 25, Nr. 1, Juni 1980, Amsterdam NL, Seiten 109 - 123 ist insbesondere auf den Seiten 119 und 120 ein Verfahren zum Trennen von Gemischen mikroskopisch kleiner, in einer Flüssigkeit oder einem Gel suspendierter dielektrischer Teilchen beschrieben. Die zu trennenden mikroskopisch kleinen Teilchen werden durch ein äußeres elektrisches Wechselfeld, das quer zur Bewegungsrichtung der Flüssigkeit bzw. des Gels angelegt ist, aufgetrennt. Das für die Auftrennung der Teilchen verwendete Hochfrequenzfeld wird jedoch nicht kontinuierlich betrieben, sondern es unterliegt einem charakteristischem Unterbrechungstakt, der konstruktionsbedingt ist und dafür sorgt, daß die einzelnen Zellen durch entsprechende Ausgänge die Trennvorrichtung verlassen können.

Desweiteren geht aus der WO-92/97657 ein Verfahren zur Handhabung mikroskopisch kleiner, dieelektischer Teilchen und Vorrichtung zur Durchführung des Verfahrens hervor, das sich im wesentlichen auf Elektrodenanordnungen beschränkt, mit denen eine geradlinige, konzentrierte Teilchenführung innerhalb eines elektrischen Wechselfeldes möglich ist. So können mit den darin beschriebenen Elektrodenanordnungen mikroskopisch kleine, dielektrische Teilchen durch enge Kanäle auf geradlinigen Bahnen geführt werden, um sie zu verschiedenen Zielorten berührungsfrei für Untersuchungen zu positionieren.

Die Entgegenhaltung WO 92/07657 offenbart lediglich, daß die Inhomogenitäten der elektrischen Felder nur einfach auf herkömmliche Weise durch "wandernde Hochfrequenzfelder" (s. Patentanspruch 1 in WO 92/07657) bewirkt werden.

Von Elektroden mit Durchbrüchen und Poren ist nichts offenbart. Auf Seite 7 in WO 92/07657 wird in Verbindung mit Anspruch 14 eine "Grundplatte beschrieben, die als dünne Membrane ausgebildet ist, auf der Elektrodensysteme aufgebracht sind. Somit sind die Elektroden selber keine Membranen. Damit eine Membrane z.B. Durchbrüche aufweist, müssen diese erst hineingeätzt werden.

Aus der WO-91 11 262 sind Elektrodenvorrichtungen bekannt, mit Hilfe derer mikrobiologische Teilchen, vorzugsweise Zellen aus einer Vorzugsrichtung, die durch die Strömung einer Trägerflüssigkeit vorgegeben ist, abzulenken. Mit Hilfe der in diesem Dokument beschriebenen Elektrodenanordnungen werden bestimmte Zellreaktionen angeregt und unterstützt, indem bestimmte Partikel räumlich in Kontakt gebracht werden. Hierzu sind die Elektrodenstrukturen entsprechend zu wählen, so daß Partikelansammlungen in bestimmten Bereichen möglich sind. Auch geht aus dieser Druckschrift die Verwendung zweier unabhängig voneinander angesteuerter Elektrodenpaare hervor, wie sie in den Figuren 7 a und b dargestellt sind. Beide Elektrodenpaare werden derart betrieben, so daß sich an ihren Elektrodenoberflächen bestimmte Teilchenpartikel anlagern können. Sind die Oberflächen vollständig mit den Partikeln überzogen, muß der Trennprozeß unterbrochen werden. Ferner bedarf die Anordnung eines strömenden Fluids, in dem die zu untersuchenden Partikel geführt werden.

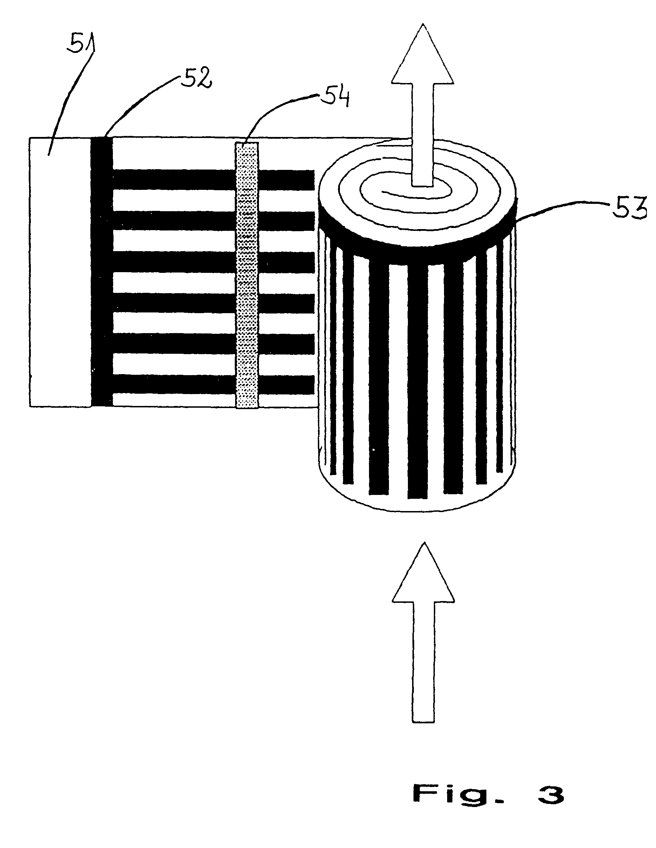

Die Veröffentlichung "Proceedings of the workshop on micro-electro mechanical systems investigation of micro structures, sensors, actuators, machines and robots, Nara, J.P., Jan 30-Feb. 2,1991, Nr. Workshop 4, 30. Januar 1991, Institute of electrical and electronics engineers, Seiten 259-264, XP000541281; Fuhr G. et al: "Linear motion of dielectric partielles and living cells in microfabricated structures induced by traveling electric fields" (Proceedings IEEE, 1991) offenbart eine Vorrichtung, wobei Teilchen mit unterschiedlichen physikalischen Eigenschaften (z.B. Dielektrizitätskonstante) als ihr Umgebungsmedium, in diesem Umgebungsmedium (welches in biologisch relevanten Fällen Wasser zu sein hat) gebündelt und transportiert werden können (s. S. 262, 1. Spalte, Zeilen 5 - 8 i.V.m. S. 261, 1. Spalte, Z. 18-20). Dabei sollte die Teilchengröße, der Elektrodendimensionierung entsprechen (s. S. 262, 1. Spalte, Z. 1-2). Eine Variation in Proceedings IEEE, 1991 wird dort in Fig. 3 beschrieben. Hier sind Elektroden entlang eines Strömungskanals angeordnet. Darin strömt das Medium. Die Elektroden sind zur Erzeugung eines Kraftfeldes mit einer Hochfrequenz-Spannungsquelle verbunden.

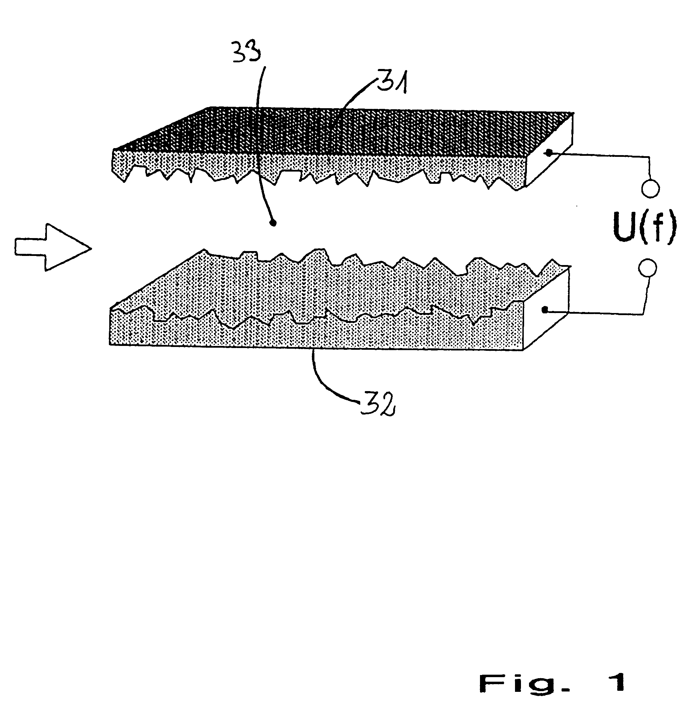

Nach Proceedings IEEE, 1991 werden im Bereich des Strömungskanals inhomogene elektrische Felder auf einen Fall nach seiner Fig. 1a angewendet, wobei die Teilchen zusätzlich zu einer Bewegung in Bereiche der niedrigsten Feldstärke gezwungen werden. Dabei sammeln sich die Teilchen in einer Zwischenelektrodenlücke (s. S. 261., 1. Spalte, Z. 18-20 i.V.m. Fig. 3) bzw. in der Mitte des Strömungskanals.

Dabei werden nach Proceedings IEEE, 1991 inhomogenen Felder nur auf eine Weise und damit anders als bei der vorliegenden Erfindung erzeugt: Es werden nur elektrische Wanderfelder unter Verwendung von phasenverschobenen Wechselfeldern benutzt.

In allen bekannten Druckschriften wird das Problem der Konvektion auf die mikrobiologischen Zellen nicht behandelt. Ferner ist bislang keine kontinuierlich arbeitende Trennvorrichtung bekannt, mit deren Hilfe die störenden Konvektionseinflüsse auf die zu trennenden Partikel gelöst ist.

### Darstellung der Erfindung

Der Erfindung liegt die Aufgabe zugrunde, eine Vorrichtung zur Trennung von Gemischen mikroskopisch kleiner, suspendierter Teilchen anzugeben, das kontinuierlich arbeitet, eine hohe Trenngüte aufweist und kostengünstig realisiert werden kann. Insbesondere soll, ohne großen gerätetechnischem Aufwand, mit Hilfe der Vorrichtung eine weitgehende Vermeidung der störenden Konvektionserscheinungen innerhalb der zu trennenden Teilchengemische ermöglicht werden.

Diese Aufgabe wird erfindungsgemäß mit einer Vorrichtung nach Anspruch 1 oder 2 gelöst. Vorteilhafte Ausführungsformen sind den Ansprüchen 2ff zu entnehmen.

Die suspendierten Teilchen werden durch die Strömung eines Suspensionsmediums auf Führungsbahnen gezwungen.

Durch eine zusätzliche Kraft werden für bestimmte Teilchensorten die Kräfte, die die Teilchen auf die Führungsbahnen zwingen, kompensiert, so daß sie aus den Führungsbahnen ausgekoppelt und damit aus dem Gemisch getrennt werden.

Das zusätzliche Kraftfeld wird durch eine hochfrequentes Wechselfeld bereitgestellt. Zur Vermeidung einer Ansammlung von dieelektrischen Teilchen an den Elektrodenoberflächen weisen die Elektroden Durchbrüche oder Poren auf, durch die die Teilchen abgeführt werden können. Auf diese Weise ist ein kontinuierlicher Betrieb möglich.

Weiterbildungen und Ausgestaltungen der Erfindung sind in den Unteransprüchen gekennzeichnet.

Die Auskopplung bestimmter Teilchensorten kann durch Variation des zusätzlichen Kraftfeldes oder durch Variation der durch das strömende Suspensionsmedium auf die Teilchen wirkenden Kraft je nach gewünschter Selektierung eingestellt werden.

Somit sieht die Vorrichtung als sogenanntes Führungsfeld ein, in eine vorgebbare Richtung strömendes Suspensionsmedium vor, das die zu trennenden Teilchen auf Führungsbahnen zwingt. Zusätzlich wirkt auf die Teilchen ein dielektrophoretisches Hochfrequenzfeld ein, das unter Kompensierung der durch die Strömung auf die Teilchen einwirkenden Kraft, diese aus der Strömung auskoppelt.

Entlang des Führungskanals sind Elektrodensysteme angeordnet, mit deren Hilfe im Strömungskanal inhomogene elektrische Wechselfelder erzeugt werden. Durch die Feldinhomogenitäten wirken auf die Teilchen dielektrophoretische Kräfte, die je nach Strömungsgeschwindigkeit und Feldstärke, bestimmte Teilchensorten aus dem Gemisch auskoppeln.

Bei einer Weiterbildung der Erfindung gemäß Anspruch 3 sind verschiedene Elektrodensysteme auf zwei Seiten eines dünnen flexiblen Materials aufgebracht. Das flexible Material ist derart zu einer dreidimenionalen Struktur gefaltet oder gewickelt, daß Durchflußkanäle entstehen, die von Elektrodensystemen eingeschlossen sind.

Eine weitere Ausgestaltung einer solchen Vorrichtung ist in Anspruch 4 gekennzeichnet. Eine langgestreckte Folie, auf deren beiden Seiten senkrecht zueinander stehende Elektrodenreihen aufgebracht sind, ist zu einer Rolle aufgewickelt. Isolierende Stege, die auf einer Seite der Folie in Richtung der Rollenachse auf den Elektroden aufgebracht sind, dienen als Abstandshalter zwischen den aufgewickelten Schichten, so daß die Rolle entlang ihrer Figurenachse von der Suspension durchströmt werden kann. Die Auskopplung der gewünschten Teilchensorte aus dem Gemisch erfolgt durch geeignete Beaufschlagung der beiderseitigen Elektrodenreihen mit einer hochfrequenten Wechselspannung.

Um zu verhindern, daß die aus dem Gemisch ausgekoppelten Teilchen die Strömung stören oder sich an den Elektroden ablagern, weisen die die Teilchenbahn begrenzenden Elemente nach Anspruch 5 passierbare Durchbrüche auf oder sind aus porösem Material gefertigt. Die ausgekoppelten Teilchen können durch die Öffnungen aus dem Strömungskanal entweichen. Besonders einfach lassen sich solche Öffnungen dadurch erzielen, daß als Grundkörper der Vorrichtung eine ultradünne Membrane verwendet wird, in die Durchbrüche geätzt werden.

Bei einer Vorrichtung gemäß Anspruch 6 weisen die Elektrodenflächen reliefartige Strukturen,- vorzugsweise Längskanäle in Richtung der Strömung des Suspensionsmediums auf. Dadurch wird eine seitliche Ablenkung der nicht ausgekoppelten, strömenden Teilchen vermieden und die Strömung beruhigt. Durch die Beruhigung der Strömung wird eine Erhöhung der Trenngüte erreicht.

Eine Weiterbildung der Erfindung nach Anpruch 7 dient zur Beeinflussung der Laufeigenschaften der strömenden Teilchen. Die lokal unterschiedliche Dicken aufweisende Isolationsschicht auf den Elektroden läßt das elektrische Feld an verschiedenen Stellen unterschiedlich stark auf die Teilchen einwirken. Auf diese Weise kann der Teilchenstrom wirksam manipuliert werden, da an verschiedenen Stellen der Vorrichtung unterschiedliche Vorzugslaufbahnen für die Teilchen geschaffen werden können. Die mulden- und wellenförmige Struktur des Überzuges dient zur Beruhigung und flexiblen Führung des Teilchenstroms.

Nach Anspruch 8 besteht eine erfindungsgemäße Vorrichtung vorzugsweise aus Materialien, die in der Mikrostrukturtechnik und der Mikroelektronik verwendet werden und wird mit den dort üblichen Verfahren hergestellt. Der Grundkörper, auf den die Elektroden aufgebracht werden, besteht vorzugsweise aus Silizium, die Elektroden aus Gold.

Nach Anspruch 9 wird die Trennvorrichtung gemeinsam mit einer elektronischen Schaltung zur Ansteuerung der Elektroden und zur Auswertung der Teilchenbewegung auf einem gemeinsamen Grundkörper, vorzugsweise einem Siliziumwafer, integriert.

Die erfindungsgemäße Vorrichtung eignet sich gemäß Anspruch 10 gut für eine Kaskadierung. Durch Hintereinanderschalten mehrerer Trennvorrichtungen wird die Trenngüte wesentlich gesteigert. Gute Ergebnisse lassen sich erzielen, wenn ein ausgekoppelter Teilstrom auf die Ausgangsvorrichtung zurückgekoppelt wird und die Kaskade erneut durchläuft. In vielen Fällen wird eine sehr hohe Trenngüte bereits dann erreicht, wenn ein ausgekoppelter Teilstrom um eine oder zwei Trennstufen zurückgekoppelt wird.

Die mit der Erfindung erzielten Vorteile bestehen insbesondere darin, daß die vorgeschlagene Auftrennung des Gemisches im Gegensatz zu üblichen Trennverfahren einen Schwellwertcharakter aufweist. Die Trennung hängt demnach nur davon ab, ob eine bestimmte Teilchensorte ihre Führung verlassen kann oder nicht. Der die Trennung bestimmende Schwellwert kann durch die leicht zu beeinflussende Beziehung zwischen den dielektrischen Führungskräften und den auslenkenden Kraftkomponenten flexibel gewählt werden. Dadurch kann die auszukoppelnde Teilchensorte einfach bestimmt werden und gleichzeitig wird eine hohe Trenngüte errreicht.

Ausführungsbeispiele der Erfindung sind in den Zeichnungen schematisch dargestellt und werden im folgenden ohne Beschränkung des allgemeinen Erfindungsgedankens näher beschrieben. Es zeigen:
- Fig. 1: ein Elektrodenpaar zur Auskopplung von Teilchen aus dem Strom eines suspendierten Teilchengemisches,
- Fig. 2: eine Elektrodenanordnung zur Auskopplung von Teilchen aus dem Strom eines suspendierten Teilchengemisches,
- Fig. 3: ein Teilchenfilter,
- Fig. 4: eine Kaskadenanordnung.

### Beschreibung eines Ausführungsbeispiels

Die Fig. 1 zeigt ein Elektrodenpaar mit dessen Hilfe Teilchen aus dem Strom eines suspendierten Teilchengemisches ausgekoppelt werden. Die Elektroden 31 und 32 schließen einen Strömungskanal 33 ein. Der ankommende Teilchenstrom ist durch einen Pfeil angedeutet. Das Teilchengemisch wird durch die Strömung des Suspensionsmediums durch die Vorrichtung bewegt. Durch dielektrophoretische Kräfte werden Teilchen einer bestimmten Sorte im Kanal 33 aus dem Gemisch ausgekoppelt. Die hierzu erforderlichen Feldinhomogenitäten werden durch die Oberflächenirregularitäten der Elektroden 31, 32 erzeugt. Die Auswahl der auszukoppelnden Teilchensorte erfolgt durch die Wahl der Frequenz und Stärke der zwischen den Elektroden 31,32 angelegten hochfrequenten Wechselspannung U (f). Die Oberflächen der Elektroden 31, 32 werden durch Ätzverfahren strukturiert.

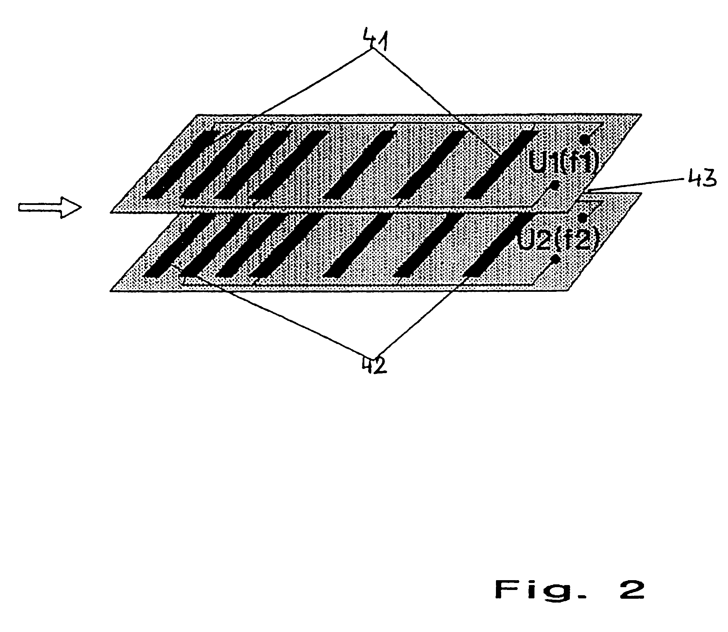

In Fig. 2 ist eine Elektrodenanordnung zur Auskopplung von Teilchen aus dem Strom eines suspendierten Teilchengemisches dargestellt. Zwei Reihen von Elektroden 41, 42 schließen einen Strömungskanal 43 ein, durch welchen das durch einen Pfeil dargestellte, suspendierte Teilchengemisch fließt. Die langgestreckten Elektroden 41, 42 der beiden Reihen sind parallel zueinander, ungleich abständig angeordnet. Jeweils benachbarte Elektroden einer Reihe sind mit verschiedenen Polen einer hochfrequenten Spannungsquelle verbunden. Durch die mittels der Elektroden 41, 42 erzeugten dielektrophoretischen Haltekräfte werden aus dem Teilchenstrom verschiedene Teilchensorten ausgekoppelt, wobei verschiedene Teilchensorten an verschiedenen Orten gehalten werden. Die Auswahl der auszukoppelnden Teilchen erfolgt durch Einstellung der angelegten Feldfrequenzen f1, f2, bzw. über die gewählten Spannungen U1, U2.

Die Fig. 3 zeigt einen zu einer Rolle aufgewickelten Teilchenfilter, dessen Ende zur Verdeutlichung ausgewickelt ist. Auf einer langgestrecken Folie 51 sind beiseitig Elektrodensysteme 52, 53 aufgebracht. Sowohl die parallel zur Längsrichtung der Folie verlaufenden Elektroden 52 auf der einen Folienoberfläche, als auch der senkrecht zur Längsrichtung der Folie verlaufenden Elektroden 53 auf der anderen Folienoberfläche, sind an einem Ende miteinander leitend verbunden. Über den Elektroden 52 sind in regelmäßigen Abständen isolierende Brücken 54 angebracht, die nach dem Aufrollen der Folie einen elektrischen Kontakt zwischen den Elektrodensystemen unterbinden und Durchströmungsräume für den Strom des suspendierten Teilchengemisches offenhalten.

Die Strömung des Teilchengemisches durch die Rolle ist durch Pfeile angedeutet. Durch dielektro-phoretische Haltefelder werden aus dem durchströmenden Teilchengemisch bestimmte Teilchensorten ausgekoppelt. Die Haltefelder werden durch Anlegen einer hochfrequenten Wechselspannung zwischen den Elektrodensystemen erzeugt.

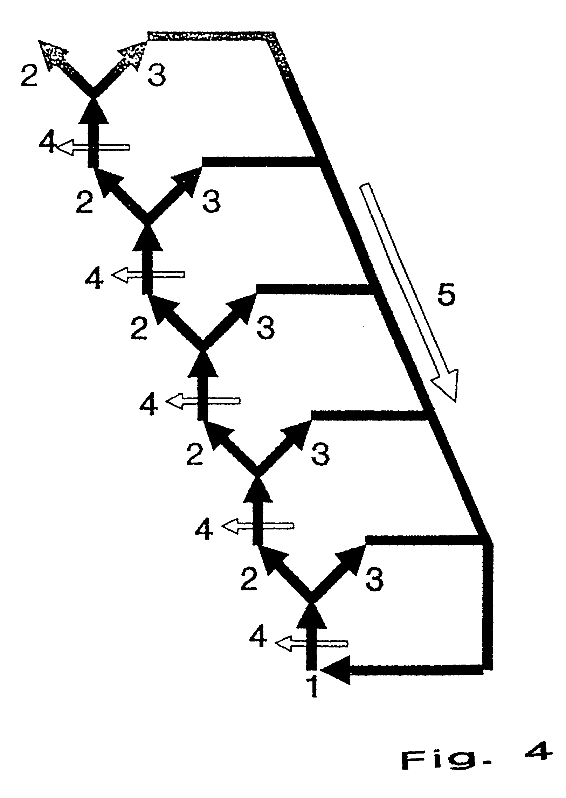

Die Fig. 4 zeigt eine kaskadenförmige Trennstrecke. Fünf Trennvorrichtungen (wie z.B. in Fig. 2 dargestellt sind hintereinander angeordnet. Die Pfeile 4 deuten an, daß in diesem Bereich durch Kombination der Dielektrophorese und einer zusätzlichen Kraft das Teilchengemisch 1 in zwei Fraktionen 2, 3 zerlegt wird. Die Fraktion der aus dem Gemisch ausgekoppelten Teilchensorte 2 durchläuft zur Reinigung von verbliebenen Teilchen des Gemisches weitere Trennstufen. Um die in der Fraktion 3 verbliebenen Teilchen der Sorte 2 zu gewinnen, wird jeweils die Teilchenfraktion 3 beispielsweise durch ein elektrisches, hochfrequentes Wanderfeld 5 zum Anfang der Kaskade oder jeweils eine Trennstufe zurückgeführt. Mit Hilfe der kaskadenförmigen Trennstrecke wird eine besonders hohe Trenngüte erreicht.

## Patentansprüche

1. Vorrichtung zur Trennung von Gemischen
mikroskopisch kleiner, in einer Flüssigkeit oder einem Gel suspendierter, dielektrischer Teilchen, wobei Elektroden entlang eines Strömungskanals angeordnet sind, in dem das Suspensionsmedium strömt, und zur Erzeugung eines Kraftfeldes mit einer oder mehreren Hochfrequenzspannungsquellen verbunden und derart ausgebildet sind, daß die erzeugten elektrischen Felder im Bereich des Strömungskanals Inhomogenitäten aufweisen,
**dadurch gekennzeichnet, daß** die Elektroden zur Erzeugung von Inhomogenitäten Oberflächen mit reliefartigen Irregularitäten aufweisen,
und **daß** die Elektroden zur Vermeidung einer Ansammlung von dielektischen Teilchen an den Elektrodenoberflächen passierbare Durchbrüche oder Poren aufweisen.

2. Vorrichtung zur Trennung von Gemischen
mikroskopisch kleiner, in einer Flüssigkeit oder einem Gel suspendierter, dielektrischer Teilchen, wobei Elektroden entlang eines Strömungskanals angeordnet sind, in dem das Suspensionsmedium strömt, und zur Erzeugung eines Kraftfeldes mit einer oder mehreren Hochfrequenz-Spannungsquellen verbunden und derart ausgebildet sind, daß die erzeugten elektrischen Felder im Bereich des Strömungskanals Inhomogenitäten aufweisen, wobei die Elektroden (41, 42) reihenhaft entlang der Strömungsrichtung parallel zueinander angeordnet sind,
**dadurch gekennzeichnet, daß** die Elektroden (41, 42) jeder Reihe zur Erzeugung von Inhomogenitäten unterschiedlich voneinander beabstandet sind, wobei die Elektroden (41,42) jeder Reihe derart mit einer Hochfrequenz-Spannungsquelle U1, U2 verbunden sind, **daß** jeweils zwei benachbarte Elektroden mit verschiedenen Polen der Spannungsquelle elektrisch verbunden sind,
und **daß** die Elektroden zur Vermeidung einer Ansammlung von dielektrischen Teilchen an den Elektrodenoberflächen passierbare Durchbrüche oder Poren aufweisen.

3. Vorrichtung nach einem der Ansprüche 1 oder 2,
**dadurch gekennzeichnet, daß** die zur Erzeugung der dielektrophoretischen Kräfte vorgesehenen Elektrodensysteme auf die beiden Seiten eines dünnen, flexiblen Materials aufgebracht sind, das derart zu einer dreidimensionalen Struktur gefaltet oder gewickelt ist, **daß** sich Durchflußkanäle ergeben, die von den Elektrodensystemen eingeschlossen sind.

4. Vorrichtung nach Anspruch 3,
**dadurch gekennzeichnet, daß** auf einer Seite einer langgestreckten Folie (51) eine Reihe in Längsrichtung der Folie verlaufende Elektroden (52) aufgebracht sind., die an einem Ende miteinander verbunden sind, **daß** auf den Elektroden in regelmäßigen Abständen isolierende Stege (54) aufgebracht sind, **daß** auf der anderen Seite der Folie (51) quer zur Längsrichtung der Folie verlaufende Elektroden (53) aufgebracht sind, die an einem Ende leitend miteinander verbunden sind, **daß** die Folie (51) derart in Längsrichtung aufgewickelt ist, **daß** die isolierenden Stege (54) als Abstandshalter zwischen den Schichten der aufgewickelten Folie dienen, und **daß** zwischen den auf den beiden Seiten der Folie (51) aufgebrachten Elektrodensystemen (52,53) eine hochfrequente Wechselspannung angelegt ist.

5. Vorrichtung nach einem der Ansprüche 1 bis 4,
**dadurch gekennzeichnet, daß** die die Teilchenbahnen begrenzenden Elemente passierbare Durchbrüche oder Poren aufweisen.

6. Vorrichtung nach einem der Ansprüche 1 bis 5,
**dadurch gekennzeichnet, daß** die Elektrodenoberflächen eine in mikroskopischer Dimension reliefartige Oberflächenstruktur derart aufweisen, **daß** in Richtung des Teilchenstroms Längskanäle ausgebildet sind.

7. Vorrichtung nach einem der Ansprüche 1 bis 6,
**dadurch gekennzeichnet, daß** die Elektrodenoberflächen mit isolierenden Materialien überzogen sind, und **daß** der Überzug Mulden, Wellen oder Bereiche unterschiedlicher Stärke aufweist.

8. Vorrichtung nach einem der Ansprüche 1 bis 7,
**dadurch gekennzeichnet, daß** der die Elektroden tragende Grundkörper aus halbleitendem Material, Glas oder Keramik besteht, **daß** die partiellen Vertiefungen, Erhöhungen oder Durchbrüche durch Ätzverfahren erzeugt sind, **daß** die Elektroden aus einem chemisch inerten Material bestehen, mit photolithographischen Methoden strukturiert und galvanisch abgeformt sind, und **daß** die dielektrischen Schichten auf den Elektroden aus SiO2, Si3N4, Bariumtitanat oder TiO2 bestehen.

9. Vorrichtung nach einem der Ansprüche 1 bis 8,
**dadurch gekennzeichnet, daß** das Multielektrodensystem zur Trennung der Teilchen zusammen mit einer elektronischen Schaltung zur Erzeugung der Felder und zur Auswertung von Teilchenbewegungen auf einem gemeinsamen Grundkörper integriert ist.

10. Vorrichtung nach einem der Ansprüche 1 bis 9,
**dadurch gekennzeichnet, daß** mehrere Vorrichtungen kaskadenförmig hintereinander angeordnet sind.

## Claims

1. Apparatus for separating mixtures of microscopic dielectric particles suspended in a liquid or a gel, wherein electrodes are arranged along a flow channel in which the suspension medium flows, and are connected to one or several high-frequency voltage sources for generating a field of forces, while they are configured in such a way that the generated electric fields present non-homogeneities in the zone of the flow channel,
**characterised in that** said electrodes for generating non-homogeneities present surfaces having relief-type irregularities,
and that said electrodes comprise passable perforations or pores on the electrode surfaces so as to avoid an accumulation of dielectric particles.

2. Apparatus for separating mixtures of microscopic dielectric particles suspended in a liquid or a gel, wherein electrodes are arranged along a flow channel in which the suspension medium flows, and are connected to one or several high-frequency voltage sources for generating a field of forces, while they are configured in such a way that the generated electric fields present non-homogeneities in the zone of the flow channel, with said electrodes (41, 42) being disposed in the form of rows along the flow direction in parallel with each other,
**characterised in that** said electrodes (41, 42) of each row are spaced from each other by different distances so as to create non-homogeneities, with said electrodes (41, 42) of each row being connected to a high-frequency voltage source U1, U2 in such a way **that** two respective adjacent electrodes are electrically connected to different poles of said voltage source,
and that said electrodes comprise passable perforations or pores on the electrode surfaces so as to avoid an accumulation of dielectric particles.

3. Apparatus according to one of the Claims 1 or 2,
**characterised in that** the electrode systems provided for generating said dielectrophoretic forces are applied on both sides of a thin flexible material which is folded or wound to form a three-dimensional structure so as to form flow passages enclosed by said electrode systems.

4. Apparatus according to Claim 3,
**characterised in that** on one side of an elongate film (51), a row of electrodes (52) is applied which extend in the longitudinal direction of said film and which are connected to each other on one end, **that** insulating webs (54) are applied on said electrodes at regular intervals, that on the other side of said film (51) electrodes (53) are applied which extend transversely with respect to the longitudinal direction of said film, which are conductively connected to each other on one end, **that** said film (51) is wound in the longitudinal direction in such a way **that** said insulating webs (54) serve as spacers between the layers of said wound film, and **that** a high-frequency alternating voltage is applied between said electrode systems (52, 53) applied on both sides of said film (51).

5. Apparatus according to any of the Claims 1 to 4,
**characterised in that** the elements limiting the particle trajectories comprise passable perforations or pores.

6. Apparatus according to any of the Claims 1 to 5,
**characterised in that** the electrode surfaces present a surface structure relief-like in a microscopic dimension, such **that** longitudinal channels are formed in the direction of said particle flow.

7. Apparatus according to any of the Claims 1 to 6,
**characterised in that** the electrode surfaces are coated with insulating materials, and **that** said coating presents troughs, undulations or zones of different thickness.

8. Apparatus according to any of the Claims 1 to 7,
**characterised in that** the basic body carrying said electrodes consists of a semiconductor material, glass or ceramic, **that** the partial recesses, projections or perforations are produced by etching techniques, **that** said electrodes consist of a chemically inert material, are structured by photo-lithographic techniques and are galvanically shaped, and **that** said dielectric layers on said electrodes consist of SiO₂, Si₃N₄, barium titanate or TiO₂.

9. Apparatus according to any of the Claims 1 to 8,
**characterised in that** the multiple electrode system for separating the particles, together with an electronic circuit for generating the fields and for analysing the particle movements, is integrated on a common basic body.

10. Apparatus according to any of the Claims 1 to 9,
**characterised in that** several apparatuses are disposed in tandem in the form of a cascade array.

## Revendications

1. Appareil pour la séparation des mélanges de particules diélectriques de taille microscopique, mises en suspension dans un liquide ou un gel, dans lequel des électrodes sont disposées le long d'une voie de courant dans laquelle s'écoule le milieu de suspension, et qui sont reliées à une ou plusieurs sources de tension HF afin d'engendrer un champ de forces, pendant qu'elles sont configurées de façon que les champs électriques engendrés présentent des non homogénéités dans la zone de la voie de courant,
**caractérisé en ce que** lesdites électrodes à engendrer des non-homogénéités présentent des surfaces aux irrégularités en relief,
et **en ce que** lesdites électrodes comprennent des ajours ou pores passables sur les surfaces d'électrode de façon à empêcher une accumulation des particules diélectriques.

2. Appareil pour la séparation des mélanges de particules diélectriques de taille microscopique, mises en suspension dans un liquide ou un gel, dans lequel des électrodes sont disposées le long d'une voie de courant dans laquelle s'écoule le milieu de suspension, et qui sont reliées à une ou plusieurs sources de tension HF de façon à engendrer un champ de forces, en étant configurées de façon que les champs électriques engendrés présentent des non-homogénéités dans la zone de la voie de courant, lesdites électrodes (41, 42) étant disposées sous forme de rangées le long du sens d'écoulement l'une en parallèle à l'autre,
**caractérisé en ce que** lesdites électrodes (41, 42) de chaque rangée sont écartées l'une de l'autre par des écarts différents, de façon à créer des non-homogénéités, lesdites électrodes (41, 42) de chaque rangée étant reliées à une source de tension HF U1, U2 de façon, que deux électrodes contiguës respectives soient raccordées électriquement aux pôles différents de ladite source de tension,
et **en ce que** lesdites électrodes comprennent des ajours ou pores passables sur les surfaces d'électrode de façon à empêcher une accumulation des particules diélectriques.

3. Appareil selon une des revendications 1 ou 2,
**caractérisé en ce que** lesdits systèmes d'électrodes, qui sont disposés pour l'établissement des forces di-électrophorétiques, sont appliqués sur les deux côtés d'un matériau mince flexible, qui est plié ou enroulé de façon à former une structure tri-dimensionnelle, en formant des voies de passage, qui sont renfermés par lesdits systèmes d'électrodes.

4. Appareil selon la revendication 3,
**caractérisé en ce qu'**une rangée d'électrodes (52) est appliquée sur une surface d'un film allongée (51), qui s'étendent en sens longitudinal dudit film et qui sont reliées l'une à l'autre à une extrémité, **en ce que** des entretoises isolantes (54) sont appliquées sur lesdites électrodes aux intervalles régulier, **en ce que** des électrodes (53) sont appliquées sur l'autre surface dudit film (51), qui s'étendent à travers relativement au sens longitudinal dudit film, en étant reliées, à connexion conductrice, l'une à l'autre sur l'autre extrémité, **en ce que** ledit film (51) est enroulé, en sens longitudinal, d'une façon, que lesdites entretoises isolantes (54) font fonction des écarteurs entre les couches dudit film enroulé, et **en ce qu'**une tension HF alternante est appliquée entre lesdits systèmes d'électrodes (52, 53) appliqués sur les deux côtés dudit film (51).

5. Appareil selon une quelconque des revendications 1 à 4,
**caractérisé en ce que** les éléments, qui définissent les trajectoires des particules, comprennent des ajours ou pores passables.

6. Appareil selon une quelconque des revendications 1 à 5,
**caractérisé en ce que** les surfaces d'électrode présentent une structure de surface en relief, aux dimensions microscopiques, de façon à former des passages en sens d'écoulement dudit courant de particules.

7. Appareil selon une quelconque des revendications 1 à 6,
**caractérisé en ce que** les surfaces d'électrode surfaces sont revêtues de matériaux isolants, et **en ce que** ledit revêtement présente des creux, des ondulations ou des zones à épaisseur différente.

8. Appareil selon une quelconque des revendications 1 à 7,
**caractérisé en ce que** le corps de base, qui porte lesdites électrodes, consiste en un matériau semi-conducteur, en verre ou en céramique, **en ce que** les creux, des bosses ou des ajours sont produits par des techniques de morsure, **en ce que** lesdites électrodes consistent en un matériau chimiquement inerte, sont structurées par des techniques de la photo-lithographie, et sont façonnées par galvanisation, et **en ce que** lesdites couches diélectriques sur lesdites électrodes consistent en SiO₂, Si₃N₄, le titanate de baryum ou en TiO₂.

9. Appareil selon une quelconque des revendications 1 à 8,
**caractérisé en ce que** le système d'électrodes multiple à séparer les particules, ensemble avec un circuit électronique pour l'établissement des champs et pour l'analyse des mouvement des particules, est intégré sur un corps de base commun.

10. Appareil selon une quelconque des revendications 1 à 9,
**caractérisé en ce que** plusieurs appareils sont disposés en tandem sous forme d'un arrangement en cascade.
